# EUROPEAN PATENT APPLICATION

(11) **EP 2 293 546 A1**
(43) Date of publication of application: **09.03.2011**
(21) Application number: 09167713.8
(22) Date of filing: 12.08.2009
(51) Int. Cl.: H04N 5/445

(54) **Apparatus and method for displaying content rating information**

(30) Priority: 28.07.2009 US 510545
(71) Applicant: SAMSUNG ELECTRONICS CO., LTD., Suwon-si Gyeonggi-do 442-742 (KR)
(72) Inventor: Noh, Young-joong, Gyeonggi-do (KR); Hong, Joo-sun, Gyeonggi-do (KR)
(74) Representative: Robinson, Ian Michael

(57) **Abstract**

Provided arc a method and apparatus for displaying content rating information for a plurality of programs including receiving the content rating information for each program of the plurality of programs; displaying a currently selected program on a display screen; determining a program rating for each program of the plurality of programs, wherein each program rating is determined from among a plurality of predetermined ratings based on the received content rating information for each program; and displaying an indicator for each program of the plurality of programs, wherein each indicator visually indicates the determined program rating for each respective program in the plurality of programs, wherein at least a portion of the currently selected program is displayed on the display screen simultaneously with the displayed indicators.

## Description

### BACKGROUND OF THE INVENTION

### Field of the Invention

Apparatuses and methods consistent with the present invention relate to displaying program ratings, and more particularly, to displaying content rating information.

### Description of the Related Art

An electronic program guide (EPG) guide, or interactive program guide (IPG) or electronic service guide (ESG) is a digital program guide for scheduled broadcast television or radio channels, and is typically displayed on-screen with functions allowing a viewer to navigate, select, discover and restrict content by time, title, channel, genre, parental ratings, etc., by use of their remote control, a keyboard, or other input devices such as a phone keypad.

Generally, displaying EPG content on a display device includes information about current and future programs provided by a content provider, including content rating information. Adults can use such content rating information to determine the suitability of individual programs for viewing by children.

Content rating information can be provided in many different forms. For example, content rating information could include television ratings such as those used in the United States' TV Parental Guidelines system: "TV-G," "TV-PG," "TV-14," "TV-MA," etc. Alternatively, content rating information could include ratings such as used by the Motion Picture Association of America: "G," "PG," "R," "NC-17," etc. As noted above, a content provider can broadcast EPG information which can include such content rating information for any and all programs provided by the content provider.

However, it is cumbersome for viewers to review content rating information for a large number of channels one at a time. Moreover, even if a viewer displays an EPG program guide including content rating information for multiple channels at once, such a display inevitably includes other information which is unnecessary for determining the suitability of individual programs for viewing by children. As a result, the viewer's screen becomes cluttered in superfluous detail, which both obstructs the viewer's viewing of a current program and obfuscates the desired content rating information. Consequently, there is a need for an improved way of providing content rating information.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Aspects of the present invention provide an apparatus and method for displaying content rating information for a plurality of programs may include receiving the content rating information for each program of the plurality of programs.

According to an exemplary embodiment of the present invention, a method of displaying content rating information for a plurality of programs may include receiving the content rating information for each program of the plurality of programs; displaying a currently selected program on a display screen; determining a program rating for each program of the plurality of programs, wherein each program rating is determined from among a plurality of predetermined ratings based on the received content rating information for each program; and displaying an indicator for each program of the plurality of programs, wherein each indicator visually indicates the determined program rating for each respective program in the plurality of programs, wherein at least a portion of the currently selected program is displayed on the display screen simultaneously with the displayed indicators.

According to an exemplary embodiment of the present invention, the method may further include receiving a command to display a ratings indicator display, wherein the displaying of the indicators is performed in response to the receiving of the command.

According to an exemplary embodiment of the present invention, each indicator may correspond to at least one of a channel logo, a text label, a graphic image and a symbol.

According to an exemplary embodiment of the present invention, each indicator may be displayed using a visual attribute which is unique for each determined program rating of each respective program, wherein the visual attribute includes at least one of size, font style, color, brightness, transparency, background color, borders, motion, underlines, italics, strikethroughs, three dimensional representation of depth, shadowing and location.

According to an exemplary embodiment of the present invention, the indicators displayed for the plurality of programs may be displayed in a scrollable list.

According to an exemplary embodiment of the present invention, the scrollable list may be customizable based on a user's preference.

According to an exemplary embodiment of the present invention, an indicator for the currently displayed program may be displayed so as to be visually distinguishable from displayed indicators for other programs in the plurality of programs.

According to an exemplary embodiment of the present invention, each of the plurality of predetermined ratings may be customizable based on a user's preference.

According to an exemplary embodiment of the present invention, the displaying of the indicators may be performed according to a user's preference.

According to an exemplary embodiment of the present invention, the method may further include: selecting a desired indicator from among the plurality of displayed indicators; and displaying a program represented by the selected displayed indicator.

According to an exemplary embodiment of the present invention, a display apparatus which displays content rating information for each of a plurality of programs, may include: a display screen which displays a currently selected program; a receiver which receives the content rating information for each of the programs; and a controller which: determines a program rating for each of the programs, wherein each respective program rating is determined from among a plurality of predetermined ratings based on the received content rating information, and controls the display screen to display an indicator for each of the programs, which visually indicates the determined program rating for each respective program, and wherein the controller controls the display screen to display at least a portion of the currently selected program simultaneously with the displayed indicator.

According to an exemplary embodiment of the present invention, the display apparatus may further include an input unit which receives a command to display the indicators, wherein the controller controls the display screen to display the indicators in response to the receiving of the command by the input unit.

According to an exemplary embodiment of the present invention, the indicators displayed for the plurality of programs may be displayed in a scrollable list on the display screen.

According to an exemplary embodiment of the present invention, the displaying of the indicators on the display screen may be performed according to a user's preference.

According to an exemplary embodiment of the present invention, the display apparatus may further include: an input unit receives a command selecting the displayed indicator, wherein the display screen displays the at least one program represented by the selected displayed indicator.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1 illustrates an example of displaying content rating information according to an exemplary embodiment of the present invention;
FIG. 2 illustrates an example of displaying indicators for a plurality of programs according to an exemplary embodiment of the present invention;
FIG. 3 illustrates an example of a display apparatus according to an exemplary embodiment of the present invention;

### DETAILED DESCRIPTION OF THE EXEMPLARY EMBODIMENTS

Hereinafter, exemplary embodiments of the present invention will be described with reference to accompanying drawings, wherein like numerals refer to like elements and repetitive descriptions will be avoided as necessary.

As noted above, "content rating information" can include television ratings such as those used in the United States' TV Parental Guidelines system: "TV-G," "TV-PG," "TV-14," "TV-MA," etc. Alternatively, content rating information could include ratings such as used by the Motion Picture Association of America: "G," "PG," "R," "NC-17," etc. However, the present invention is not limited to these examples, and can apply to many different types of program rating systems.

Additionally, a content provider can broadcast EPG information which can include such content rating information for all programs provided by the content provider. However, the present invention is not limited to receiving content rating information via an EPG stream. One of skill in the art would recognize that content rating information might be received in other ways.

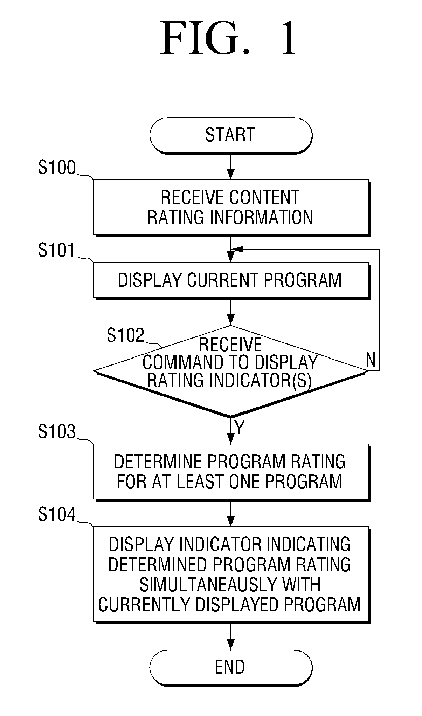

FIG. 1 illustrates an example of displaying content rating information according to an exemplary embodiment of the present invention. In operation S100, content rating information is received. Meanwhile, in operation S101, a currently selected program is displayed on a display screen. If a user enters a command to display a ratings indicator display (operation S102-Y), a program rating for each program is determined based on the received content rating information (operation S103). The ratings indicators each program is then displayed simultaneously with the displayed currently selected program (operation S104).

Further, the ratings indicator can be displayed in a way that visually indicates the determined program rating for each program. That is, each indicator can be displayed using a visual attribute which is unique for each determined program rating of each respective program, wherein the visual attribute includes at least one of size, font style, color, brightness, transparency, background color, borders, motion, underlines, italics, strikethroughs, three dimensional representation of depth, shadowing and location. For example, based on the received content rating information, if a program is determined to have a rating of "TV-G," the indicator for each program is displayed in a way that is unique for the "TV-G" rating. Of course, one of skill in the art would recognize that the present invention is not limited to using the above-noted rating system, as any program rating system can be utilized.

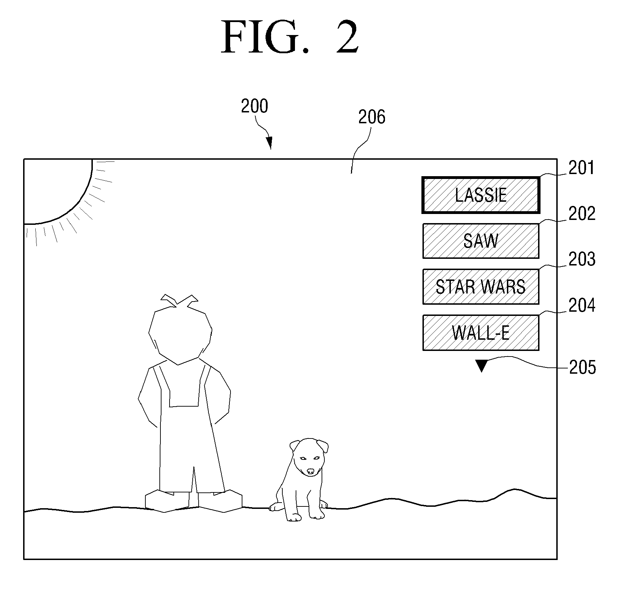

FIG. 2 shows an example of displaying indicators for each program in a way that is unique for the determined program rating of each respective program. As shown in FIG. 2, a program "Lassie" 201 is currently being displayed. The indicator for "Lassie" 201 is shown in the upper right corner of the screen 200. In this example, the program "Lassie" is determined to have a "G" rating. Consequently, the indicator for "Lassie" 201 is displayed in a way that is unique for "G" rating programs. As a result, the user can readily determine that the program "Lassie" has a "G" rating.

Likewise, in this example, the indicators for the other programs, "Saw" 202 and "Star Wars" 203 and "Wall-E" 204 are determined to have an "R" rating, a "PG" rating and a "G" rating, respectively. However, "Wall-E" 204, is shown here as having the same visually distinguishing pattern as "Lassie" 201. Consequently, a user can readily determine that both "Lassie" 201 and "Wall-E" 204 have a "G" rating. Thus, as shown in the example of FIG. 2, the indicators for the four programs, 201, 202, 203 and 204 are displayed so that ratings indicators for differently rated programs are visually distinguishable from each other.

In the above example, once the user enters a command to display a ratings indicator display, the displayed rating indicators for the plurality of programs are displayed in a simple list format. However, if the number of displayed rating indicators is larger than can be displayed on one screen, the displayed rating indicators for the plurality of programs can be displayed so that the user can readily see the additional rating indicators which may not able to be shown on the initial screen, for example, in a scrollable format. By making the list of FIG. 2 scrollable, a user could see a maximum number of rating indicators (201-204) on a screen, and then the user could select a page up/down icon (205), for example, to see the additional rating indicators not able to be shown on the initial screen (200) due to the limited screen size.

Further, as shown in FIG. 2, the ratings indicators for the plurality of programs (i.e., 201, 202, 203 and 204) can be displayed simultaneously with the displayed currently selected program 206, so that a user may continue viewing the currently selected program 206, for example, by using only a small portion of the display screen 200.

In order to maximize the usability of the display screen 200, the displaying of the rating indicators for the plurality of programs can be customized based on a user's preference. For example, a user might choose to display the ratings indicators for the plurality of programs (i.e., 201, 202, 203 and 204) in a larger or smaller size so as to share more or less of the screen 200 with the currently selected program 206. Similarly, a user might choose to relocate any or all of the displayed indicators in different parts of the display screen 200. One of skill in the art would recognize that a control screen and/or command could be employed to allow the user the ability to customize the displaying of the rating indicators for the plurality of programs.

Moreover, the user might also choose not to show any indicators for programs in a certain ratings category. For example, a user might not want any indicators for programs having an "R" rating to be displayed, thereby displaying only those indicators for "G" and "PG" rated programs. Again, one of skill in the art would recognize that a control screen and/or command could be employed to allow the user the ability to customize the displaying of the rating indicators for the plurality of programs.

Further, the ratings indicators themselves could be defined according to a user's preference. For example, if received program has a rating of "PG," but the user desires the "PG" and "R" rating indicators to be displayed in the same way. That is, the user might wish all the "PG" and "R" rating indicators to appear in red color for example, and all "G" rated program indicators to appear as the color green. In this way, the use might set the "PG" and "R" rating as being equivalent to each other. In this way, any received programs having "PG" and "R" ratings would be displayed in a similar way in according with the user's preference. Thus, even if each of the received programs have a predetermined rating, a user can customize the ratings category so as to result in a display of program rating indicators according to the user's personal preferences. Again, a user might utilize a control screen and/or command, such as described above, to perform such customization the displaying of the rating indicators for the plurality of programs.

As noted above, "Lassie" is the currently selected program 206 being displayed on the screen 200. In order to distinguish the "Lassie" indicator as being the currently displayed program, as shown in FIG. 2, a bold border 207 is added so a user can easily determine which indicator corresponds to the currently selected program 206. Of course, one of skill in the art would understand that the currently selected program 206 could be distinguished in alternative ways besides the use of a bold border. Any visually distinctive characteristic could suffice. For example, the ratings indicator for currently selected program 206 could be displayed as being larger than the other ratings indicators.

A user might also use the display of the rating indicators to change the currently selected program 206. For example, as shown in FIG. 2, the program "Lassie" 201 is currently being displayed. As noted above, a bold border 207 is used to signify which program rating indicator corresponds to the currently selected program 206. If a user desires to change the currently selected program to "Wall-E" 204, for example, the user could simply select (or double-click, etc.) the indicator for "Wall-E" 204, and cause the currently selected program to change to "Wall-E" 204. Using the scrollable list example noted above, the list could then scroll so as to move "Wall-E" 204 to the top position formerly occupied by "Lassie" 201, and/or change the bold border 207 to be around the indicator for "Wall-E" 204 instead of "Lassie" 201.

The displayed rating indicators for the plurality of programs can be displayed in different formats. That is, the indicators might be displayed as a text label, corresponding, for example, to the name of the program on the respective channel. Alternatively, each of the indicators could be displayed as a symbol (e.g., "G," "PG," etc.). Likewise, the commonly recognized logo for a respective channel could be used as the displayed indicator (e.g., "NBC," "HBO," etc.). Similarly, the design of the indicators could be according to a user's preference. For example, a user might to choose to display a custom label or icon for each of the respective indicators. Again, one of skill in the art would recognize that a control screen and/or command could be employed to allow the user the ability to customize the displaying of the rating indicators for the plurality of programs.

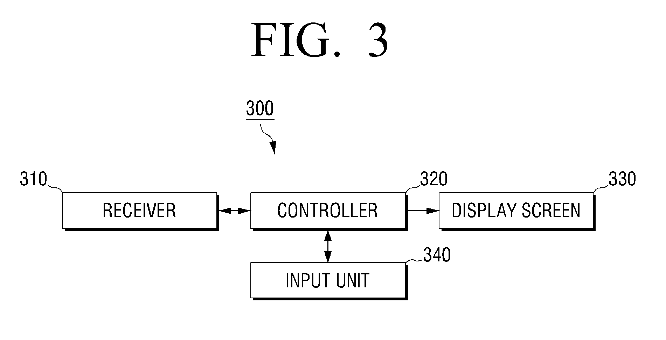

As shown in FIG. 3, a display apparatus 300 according to an exemplary embodiment of the present invention includes a receiver 310 which receives the content rating information for the plurality of programs, a display screen 330 which displays a currently selected program and the rating indicators for the plurality of programs, an input unit which receives a command to display the rating indicators and a controller 320 which controls all of the other components, and in response to the receiving of the command by the input unit, controls the display screen 330 to display the rating indicators for the each of the plurality of programs and controls the display screen 330 to display at least a portion of the currently selected program simultaneously with the displayed rating indicators.

In the event that a logo is displayed for each of the rating indicators, logo information for the respective channels could be received via the receiver and/or stored in a memory (not shown) of the display apparatus 300. Whether received or stored, the logo information can be mixed with EPG information (e.g., content rating information) provided by a content provider. That is, content rating information received via the received EPG information for the plurality programs may be combined with the logo information for displaying the ratings indicators so as to match the logo information with the received EPG information.

As noted above, logo information may be stored and then combined with the received EPG information for the plurality programs for displaying the ratings indicators. One of skill in the art would readily observe that other types of indicators may be pre-stored and combined with received EPG information. For example, predetermined symbols, text labels or graphic images may also be pre-stored and combined with the received EPG information for the plurality programs for displaying the ratings indicators.

For example, referring to FIG. 2, received EPG information for the program "Lassie" 201 may include content rating information indicating a "G" rating. As noted above, the received EPG information may also include a logo or text label, etc. to be displayed. In the example shown in FIG. 2, the text label "Lassie" is displayed as the program rating indicator 201. The received EPG information may also include the text label "Lassie" (or logo, symbol, graphic image, etc.). The text label can then be matched to one of the predetermined ratings category (e.g., "G") and displayed accordingly, as described above.

While the example above describes using logo information and text labels, one of skill in the art would understand that rating indicators for the plurality of programs indicator may include other things, such as symbols, icons, graphic images, etc.

The foregoing exemplary embodiments are merely exemplary and are not to be construed as limiting the present invention. The present teaching can be readily applied to other types of methods and apparatuses. Also, the description of the exemplary embodiments of the present invention is intended to be illustrative, and not to limit the scope of the claims, and many alternatives, modifications, and variations will be apparent to those skilled in the art.

## Claims

1. A method of displaying content rating information for a plurality of programs, the method comprising:
receiving the content rating information for each program of the plurality of programs;
displaying a currently selected program on a display screen;
determining a program rating for each program of the plurality of programs, wherein each program rating is determined from among a plurality of predetermined ratings based on the received content rating information for each program; and
displaying an indicator for each program of the plurality of programs, wherein each indicator visually indicates the determined program rating for each respective program in the plurality of programs,
wherein at least a portion of the currently selected program is displayed on the display screen simultaneously with the displayed indicators.

2. The method according to claim 1, further comprising receiving a command to display a ratings indicator display, wherein the displaying of the indicators is performed in response to the receiving of the command.

3. The method according to claim 1, wherein each indicator corresponds to at least one of a channel logo, a text label, a graphic image and a symbol.

4. The method according to claim 3, wherein each indicator is displayed using a visual attribute which is unique for each determined program rating of each respective program, wherein the visual attribute includes at least one of size, font style, color, brightness, transparency, background color, borders, motion, underlines, italics, strikethroughs, three dimensional representation of depth, shadowing and location.

5. The method according to claim 1, wherein the indicators displayed for the plurality of programs are displayed in a scrollable list,
wherein the scrollable list is customizable based on a user's preference.

6. The method according to claim 5, wherein an indicator for the currently displayed program is displayed so as to be visually distinguishable from displayed indicators for other programs in the plurality of programs.

7. The method according to claim 1, wherein each of the plurality of predetermined ratings is customizable based on a user's preference,
wherein the displaying of the indicators are performed according to a user's preference.

8. The method according to claim 1 further comprising:
selecting a desired indicator from among the plurality of displayed indicators; and
displaying a program represented by the selected displayed indicator.

9. A display apparatus which displays content rating information for each of a plurality of programs, the apparatus comprising:
a display screen which displays a currently selected program;
a receiver which receives the content rating information for each of the programs; and
a controller which:
determines a program rating for each of the programs, wherein each respective program rating is determined from among a plurality of predetermined ratings based on the received content rating information, and
controls the display screen to display an indicator for each of the programs, which visually indicates the determined program rating for each respective program, and wherein the controller controls the display screen to display at least a portion of the currently selected program simultaneously with the displayed indicator.

10. The display apparatus according to claim 9, further comprising an input unit which receives a command to display the indicators, wherein the controller controls the display screen to display the indicators in response to the receiving of the command by the input unit.

11. The display apparatus according to claim 9, wherein each indicator corresponds to at least one of a channel logo, a text label icons, a graphic image and a symbol.

12. The display apparatus according to claim 11, wherein each indicator is displayed using a visual attribute which is unique for the determined program rating for each respective program, wherein the visual attribute includes at least one of size, font style, color, brightness, transparency, background color, borders, motion, underlines, italics, strikethroughs, three dimensional representation of depth, shadowing and location.

13. The display apparatus according to claim 9 wherein the indicators displayed for the plurality of programs are displayed in a scrollable list on the display screen,
wherein the scrollable list is customizable based on a user's preference.

14. The display apparatus according to claim 13 wherein an indicator for the currently displayed program is displayed so as to be visually distinguishable from the indicators displayed for other programs in the plurality of programs.

15. The display apparatus according to claim 9 wherein each of the plurality of predetermined ratings is customizable based on a user's preference,
wherein the displaying of the indicators on the display screen is performed according to a user's preference.
